# EUROPÄISCHE PATENTSCHRIFT

(11) **EP 1 218 230 B1**
(45) Veröffentlichungstag und Bekanntmachung des Hinweises auf die Patenterteilung: **02.03.2005**
(21) Anmeldenummer: 00931251.3
(22) Anmeldetag: 20.05.2000
(51) Int. Cl.: B60S 1/24, B60S 1/16, F16L 13/14

(54) **WISCHEINRICHTUNG**
WIPING DEVICE
DISPOSITIF D'ESSUIE-GLACE

(30) Priorität: 04.10.1999 DE 19947620
(43) Veröffentlichungstag der Anmeldung: 03.07.2002
(73) Patentinhaber: Valeo Wischersysteme GmbH, 74321 Bietigheim-Bissingen (DE)
(72) Erfinder: WALTHER, Bernd, D-74321 Bietigheim-Bissingen (DE)
(74) Vertreter: Jahn, Wolf-Diethart
(86) Internationale Anmeldenummer: PCT/EP2000/004600
(87) Internationale Veröffentlichungsnummer: WO 2001/025065

(56) Entgegenhaltungen:
- EP-A- 0 798 181
- US-A- 4 118 134
- US-A- 5 823 065

## Beschreibung

Die Erfindung betrifft eine Wischeinrichtung zur Wischung von Scheiben an Fahrzeugen, mit einem Wischmotor, mit einem an der Antriebswelle des Wischmotors angeordneten Getriebe, mit einem das Getriebe umgebenden Getriebegehäuse, mit einem an dem Getriebegehäuse angeordneten Getriebegehäusedeckel, mit einer Getriebeabtriebswelle und mit einer an der dem Getriebe abgewandten Seite des Getriebegehäuses an der Getriebeabtriebswelle drehfest angeordneten Kurbel. Eine Wischeinrichtung dieser Art ist beispielsweise aus EP-A-0 798 181 bekannt.

Außerdem betrifft die Erfindung ein Verfahren zur Befestigung der Kurbel an der Getriebeabtriebswelle.

Nach dem allgemein bekannten Stand der Technik wird die Kurbel an der Getriebeabtriebswelle mittels einer Schraubverbindung drehfest gesichert. Dazu wird die Kurbel über eine an der Kurbel vorhandene Bohrung auf das der Kurbel zugewandte Ende der Getriebeabtriebswelle aufgesetzt. Die Getriebeabtriebswelle weist dabei an ihrem Endabschnitt ein Gewinde auf, auf welches eine Befestigungsmutter aufgeschraubt wird, mittels der die Kurbel kraftschlüssig mit der Getriebeabtriebswelle verbunden wird.

Ein solcher Stand der Technik weist insbesondere den Nachteil auf, dass die Befestigungsmutter in montiertem Zustand auf der dem Getriebegehäuse abgewandten Oberfläche der Kurbel aufliegt. Aufgrund der Befestigungsmutter ist es erforderlich, die Kurbel derart auszugestalten, dass ein an dem freien Ende der Kurbel, über einen Gelenkkopf mit der Kurbel verbundenes, Wischgestänge bei sich drehender Kurbel nicht durch die Befestigungsmutter behindert wird. Dabei kann insbesondere vorgesehen sein, dass die Kurbel in dem Getriebegehäuse abgewandte Richtung abgebogenen ist. Dazu ist allerdings ein extra Abbiegevorgang bei der Fertigung der Kurbel erforderlich, was mit Aufwand und Kosten verbunden ist. Außerdem hat ein solches Abbiegen der Kurbel eine ungleichmäßige Verteilung der Druck- und Zugspannungen der Kurbel aufgrund der mit der Kurbel zu übertragenden Kräfte und Drehmomente zur Folge.

Der Erfindung liegt deshalb die Aufgabe zugrunde, eine Wischeinrichtung vorzuschlagen, bei der eine besondere Ausgestaltung der Kurbel aufgrund der Anordnung der Kurbel an der Getriebeabtriebswelle nicht erforderlich ist. Die Kurbel soll dabei dennoch dauerhaft funktionssicher mit der Getriebeabtriebswelle verbunden sein.

Zur Lösung der Aufgabe wird eine Wischeinrichtung der eingangs beschriebenen Art vorgeschlagen, die vorsieht, dass die Getriebeabtriebswellen-Kurbel-Verbindung eine Pressverbindung ist und dass das Getriebegehäuse oder der Getriebegehäusedeckel auf der der Kurbel abgewandten Seite eine Öffnung aufweist, durch welche zur Verpressung der Getriebeabtriebswelle mit der Kurbel das der Kurbel abgewandte Ende der Getriebeabtriebswelle abstützbar ist.

Eine solche Pressverbindung weist insbesondere den Vorteil auf, dass keine Befestigungsmutter auf der dem Getriebe abgewandten Oberfläche der Kurbel oder ein sonstiges Befestigungselement zur Befestigung der Kurbel an der Getriebeabtriebswelle vorhanden ist. Vielmehr schließt die Stirnseite der Getriebeabtriebswelle mit der Kurbel plan ab, bzw. ragt nicht über die Oberfläche der Kurbel hinaus. Damit ist eine besondere Ausgestaltung der Kurbel aufgrund eines auf der Oberfläche der Kurbel vorhandenen Befestigungselements nicht erforderlich. Die Kurbel kann also bei einer Weiterbildung der Erfindung ungebogen und damit eben ausgeführt sein.

Dadurch, dass das Getriebegehäuse oder der Getriebegehäusedeckel in diesem Bereich eine Öffnung aufweist und zur Einpressung und/oder Verstemmung der Getriebeabtriebswelle mit der Kurbel das der Kurbel abgewandte Ende der Getriebeabtriebswelle durch die Öffnung abstützbar ist, wird der Einpress- und/oder Verstemmvorgang auf vorteilhafte Art und Weise vereinfacht.

Außerdem ist eine Getriebeabtriebswellen-Kurbel-Verbindung in Form einer Pressverbindung maschinell auf einfache und kostengünstige Art und Weise zu realisieren.

Ein weiterer Vorteil einer solchen Verbindung ist, dass keine zusätzlichen Bauteile wie Befestigungsmuttern, Gewindeabschnitte, Unterlegscheiben oder dergl. zur Realisierung der Getriebeabtriebswellen-Kurbel-Verbindung benötigt werden.

Nach einer bevorzugten Ausführungsform der Erfindung ist das Innenteil der Pressverbindung die Getriebeabtriebswelle und das Außenteil der Pressverbindung eine an der Kurbel vorhandene Zylinderbohrung. Eine derart ausgestaltete Pressverbindung hat den Vorteil, dass die Getriebeabtriebswelle ohnehin einen kreisrunden Querschnitt aufweist, so dass lediglich an der Kurbel eine Zylinderbohrung mit entsprechenden Toleranzen zu fertigen ist. Dabei sind die Fügeflächen zylindrisch.

Bei einer Weiterbildung der Erfindung ist vorgesehen, dass die Getriebeabtriebswelle mit der Kurbel verstemmt ist. Bei einer solchen Verstemmung wird beispielsweise der Bereich der Stirnseite der Getriebeabtriebswelle plastisch verformt und dabei derart verdrängt, dass die Getriebeabtriebswelle die Kurbel bzw. die Zylinderbohrung der Kurbel, wenigstens abschnittsweise geringfügig hintergreift. Um eine solche Verstemmung zu ermöglichen, kann vorgesehen sein, dass vor dem Verstemmvorgang das freie Ende der Getriebeabtriebswelle geringfügig durch die Zylinderbohrung auf die der Getriebegehäuse abgewandten Seite der Kurbel ragt und der überragende Abschnitt plastisch verformt bzw. verdrängt wird.

Nach einer Weiterbildung der Erfindung ist vorgesehen, dass die Zylinderbohrung der Kurbel auf der dem Getriebegehäuse abgewandten Seite eine Anfasung, eine Zylindersenke oder einen anders geformten Ausschnitt aufweist. Eine solche Ausgestaltung der Zylinderbohrung weist den Vorteil auf, dass der verstemmte Abschnitt der Getriebeabtriebswelle von der Anfasung, der Zylindersenke oder des anders geformten Ausschnitts aufgenommen werden kann. Damit ist eine plane und ebene Oberfläche der Kurbel trotz Verstemmung des entsprechenden Getriebeabtriebswellenabschnitts gewährleistet.

Nach einer anderen Ausbildung der Erfindung ist vorgesehen, dass sich die Getriebeabtriebswelle auf der der Kurbel abgewandten Seite bis in den Bereich zum Getriebegehäuse oder Getriebegehäusedeckel erstreckt. Eine solche Ausgestaltung weist insbesondere den Vorteil auf, dass aufgrund der Öffnung das der Kurbel abgewandte Ende der Getriebeabtriebswelle zugänglich ist und der Pressvorgang bzw. der Stemmvorgang erleichtert durchgeführt werden kann.

Bei einer weiteren vorteilhaften Ausgestaltung der Erfindung ist die Öffnung insbesondere mit einer Abdeckkappe verschließbar. Durch eine solche Verschließbarkeit der Öffnung kann gewährleistet werden, dass ein Eindringen von Feuchtigkeit, Staub oder Schmutz in das Getriebegehäuse wirksam verhindert wird.

Zur Lösung der eingangs genannten Aufgabe der Erfindung ist außerdem ein erfindungsgemäßes Verfahren zur Montage einer Wischeinrichtung zur Wischung von Scheiben an Fahrzeugen, mit einem Wischmotor, mit einem an der Antriebswelle des Wischmotors angeordneten Getriebe, mit einem das Getriebe umgebenden Gehäuse, mit einer Getriebeabtriebswelle und mit einer an der Getriebeabtriebswelle drehfest angeordneten Kurbel vorgesehen, das vorsieht, dass die Getriebeabtriebswelle in eine an der Kurbel vorhandene Zylinderbohrung eingepresst und ggf. verstemmt wird, wobei zur Verpressung oder Verstemmung der Getriebeabtriebswelle mit der Kurbel das der Kurbel abgewandte Ende der Getriebeabtriebswelle durch eine Öffnung abgestützt wird, die auf der der Kurbel abgewandten Seite des Getriebegehäuses oder Getriebegehäusedeckels vorgesehen ist. Das Einpressen kann dabei insbesondere durch Längseinpressen, Schrumpfen oder Dehnen erfolgen.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: eine Wischeinrichtung in perspektivischer Ansicht von oben und
- Figur 2: dieselbe Wischeinrichtung in perspektivischer Ansicht von schräg unten.

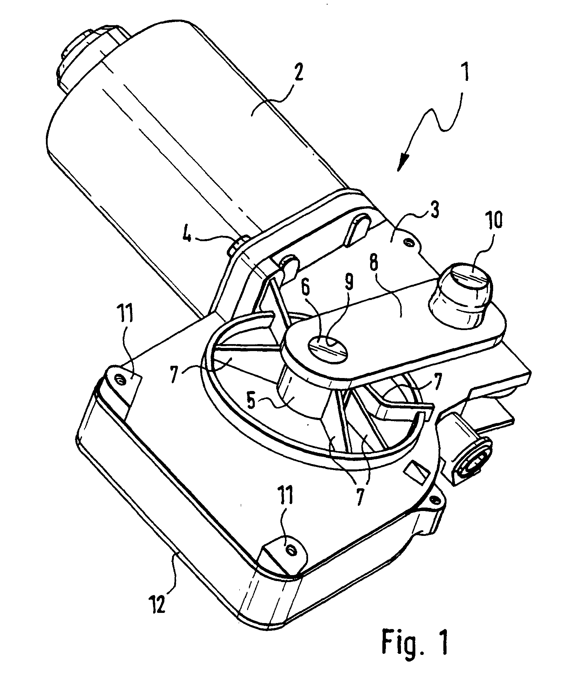

In der Figur 1 ist eine Wischeinrichtung 1 zur Wischung von Scheiben an Fahrzeugen dargestellt, die einen Wischmotor 2 sowie ein an der nicht zu sehenden Antriebswelle des Wischmotors 2 angeordnetes Getriebe, das von einem Getriebegehäuse 3 umgeben ist, aufweist. Das Getriebegehäuse 3 ist dabei mit Befestigungsmitteln, wie beispielsweise einer Schraube 4, mit dem Wischmotor 2 starr verbunden. Von dem in dem Getriebegehäuse 3 angeordneten Getriebe ist in der Figur 1 lediglich eine Getriebeabtriebswelle 6 dargestellt, welche von einem an das Getriebegehäuse 3 angegossenen Lagerstutzen 5 gelagert ist. Zur Versteifung des Getriebegehäuses 3 im Bereich um den Lagerstutzen 5 sind an dem Getriebegehäuse 3 mehrere Versteifungsstege 7 vorhanden.

An dem freien, den Lagerstutzen 5 überragenden Ende der Getriebeabtriebswelle 6 ist eine Kurbel 8 an der Getriebeabtriebswelle 6 drehfest angeordnet. Die Getriebeabtriebswellen-Kurbel-Verbindung ist dabei erfindungsgemäß eine Pressverbindung. Das Innenteil der Pressverbindung ist dabei die Getriebeabtriebswelle 6, welche von dem Außenteil der Pressverbindung, nämlich einer an der Kurbel 8 vorhandenen Zylinderbohrung 9 umgeben ist. Die Fügefläche zwischen der Getriebeabtriebswelle 6 und der Zylinderbohrung 9 ist dabei zylindrisch.

Alternativ dazu kann erfindungsgemäß auch vorgesehen sein, dass das Innenteil ein an der Kurbel 8 vorhandener Stift ist und dass das Außenteil eine axiale Zylinderbohrung in der Getriebeabtriebswelle 6 darstellt.

Bei dem in der Figur 1 gezeigten Ausführungsbeispiel der Erfindung ist die Getriebeabtriebswelle 6 außerdem mit der Kurbel 8 verstemmt. Durch ein solches Verstemmen wird das über die Pressverbindung übertragbare Drehmoment erhöht und die Kurbel 8 wird auf der Getriebeabtriebswelle zusätzlich gesichert.

Wie aus der Figur 1 deutlich zu erkennen ist, bildet die Stirnseite des freien Endes der Getriebeabtriebswelle 6 zusammen mit der dem Getriebegehäuse 3 abgewandten Oberfläche der Kurbel 8 eine weitgehend ebene Oberflächengeometrie. Dadurch wird vorteilhafterweise erreicht, dass eine Abbiegung der Kurbel 8 aufgrund eines gemäß dem Stand der Technik auf der Kurbel anzuordnenden Befestigungselements zur Befestigung an der Kurbel 8 an der Getriebeabtriebswelle 9 nicht erforderlich ist. Vielmehr kann bei einer Weiterbildung der Erfindung ein auf der der Getriebeabtriebswelle 6 abgewandten Seite der Kurbel 8 vorhandener Gelenkkopf 10 mit einem Wischgestänge gekoppelt werden, welches insbesondere parallel zu der Kurbel 8 angeordnet ist und durch welches die an den Scheiben des Fahrzeuges vorhandenen Wischblätter angetrieben werden. Eine besondere geometrische Anpassung oder Ausgestaltung der Kurbel 8 aufgrund der drehfesten Anordnung der Kurbel 8 an der Getriebeabtriebswelle 6 ist erfindungsgemäß nicht erforderlich.

Das Getriebegehäuse 3 weist außerdem zwei Gewindedome 11 auf, welche zur Anbringung des Getriebegehäuses 3 mit Wischmotor 2 an der Fahrzeugkarosserie vorgesehen sind.

In Figur 1 ist weiterhin ein Getriebegehäusedeckel 12 dargestellt, welcher abnehmbar ausgebildet ist.

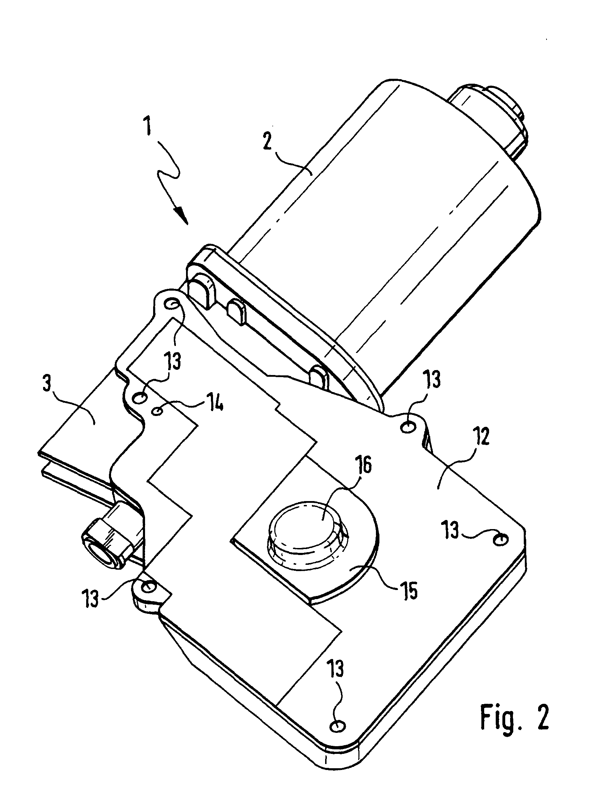

In der Figur 2, in der die Wischeinrichtung 1 von unten zu sehen ist, ist der Getriebegehäusedeckel 12 in seiner gesamten Größe gut zu erkennen. Zur Befestigung des Getriebegehäusedeckels 12 an dem Getriebegehäuse 3 weist der Getriebegehäusedeckel 12 verschiedene Bohrungen 13 auf, durch welche in der Figur 2 nicht dargestellte Befestigungsschrauben führbar und in dem Getriebegehäuse 3 verschraubbar sind. Zur Zentrierung des Getriebegehäusedeckels 12 an dem Getriebegehäuse 3 weist der Getriebegehäusedeckel 12 ein Zentrierauge 14 auf, in welches ein an dem Getriebegehäuse 3 vorhandener Zentrierpin einrastbar ist.

In der Figur 2 ist außerdem eine Abdeckkappe 15 dargestellt, die zur Abdeckung einer Öffnung in dem Getriebegehäusedeckel 12 vorgesehen ist. Die Öffnung ist dabei in dem Bereich angeordnet, in welchem sich die durch das Getriebegehäuse 3 erstreckende Getriebeabtriebswelle 6 den Getriebegehäusedeckel 12 überragt. Zur Aufnahme dieses Endes der Getriebeabtriebswelle 6 weist die Abdeckkappe 15 eine Auswölbung 16 auf.

Die in der Figur 2 gezeigte und beschriebene Ausführungsform der Erfindung weist insbesondere den Vorteil auf, dass zur Einpressung und Verstemmung der Getriebeabtriebswelle 6 mit der Kurbel 8 das der Kurbel 8 abgewandte Ende der Getriebeabtriebswelle 6 durch Abnehmen der Abdeckkappe 15 zugänglich und abstützbar ist. Damit kann die Getriebeabtriebswelle 6 mit der Kurbel 8 verpresst oder verstemmt werden, ohne dass es erforderlich ist, den Getriebegehäusedeckel 12 von dem Getriebegehäuse 3 abzunehmen. Erfindungsgemäß genügt es, die abnehmbare Abdeckkappe 15 von dem Getriebegehäusedeckel 12 abzunehmen, um die Press- und/oder Verstemmvorrichtung an das unter der Abdeckkappe 15 vorhandene Ende der Getriebeabtriebswelle anzusetzen und abzustützen.

Alle in der Beschreibung, den nachfolgenden Ansprüchen und der Zeichnung dargestellten Merkmale können sowohl einzeln, als auch in beliebiger Kombination miteinander erfindungswesentlich sein.

## Patentansprüche

1. Wischeinrichtung (1) zur Wischung von Scheiben an Fahrzeugen, mit einem Wischmotor (2), mit einem an der Antriebswelle des Wischmotors (2) angeordneten Getriebe, mit einem das Getriebe umgebenden Getriebegehäuse (3), mit einem an dem Getriebegehäuse (3) angeordneten Getriebegehäusedeckel (12), mit einer Getriebeabtriebswelle (6) und mit einer an der dem Getriebe abgewandten Seite des Getriebegehäuses (12) an der Getriebeabtriebswelle (6) drehfest angeordneten Kurbel (8), **dadurch gekennzeichnet, dass** die Getriebeabtriebswellen-Kurbel-Verbindung eine Pressverbindung ist und dass das Getriebegehäuse (3) oder der Getriebegehäusedeckel (12) auf der der Kurbel (8) abgewandten Seite eine Öffnung aufweist, wobei zur Verpressung der Getriebeabtriebswelle (6) mit der Kurbel (8) das der Kurbel (8) abgewandte Ende der Getriebeabtriebswelle (6) durch die Öffnung abstützbar ist.

2. Wischeinrichtung (1) nach Anspruch 1, **dadurch gekennzeichnet, dass** das Innenteil der Pressverbindung die Getriebeabtriebswelle (6) und dass das Außenteil der Pressverbindung eine an der Kurbel (8) vorhandene Zylinderbohrung (9) ist.

3. Wischeinrichtung (1) nach Anspruch 1 und 2, **dadurch gekennzeichnet, dass** die Getriebeabtriebswelle (6) mit der Kurbel (8) verstemmt ist.

4. Wischeinrichtung (1) nach Anspruch 3, **dadurch gekennzeichnet, dass** die Zylinderbohrung (9) der Kurbel auf der dem Getriebegehäuse (3) abgewandten Seite ein Anfasung, eine Zylindersenke oder einen anders geformten Ausschnitt aufweist.

5. Wischeinrichtung (1) nach einem der vorhergehenden Ansprüche, **dadurch gekennzeichnet, dass** die Öffnung mit insbesondere einer Abdeckkappe (15) verschließbar ist.

6. Wischeinrichtung (1) nach einem der vorhergehenden Ansprüche, **dadurch gekennzeichnet, dass** sich die Getriebeabtriebswelle (6) auf der der Kurbel (8) abgewandten Seite bis in den Bereich des Getriebegehäuses (3) oder Getriebegehäusedeckels (12) erstreckt.

7. Verfahren zur Montage einer Wischeinrichtung (1) gemäß Oberbegriff von Anspruch 1, **dadurch gekennzeichnet, dass** die Getriebeabtriebswelle (6) in eine an der Kurbel (8) vorhandene Zylinderbohrung (9) eingepresst und ggf. verstemmt wird, wobei zur Verpressung oder Verstemmung der Getriebeabtriebswelle (6) mit der Kurbel (8) das der Kurbel (8) abgewandte Ende der Getriebeabtriebswelle (6) durch eine Öffnung abgestützt wird, die auf der der Kurbel (8) abgewandten Seite des Getriebegehäuses (3) oder Getriebegehäusedeckels (12) vorgesehen ist.

## Claims

1. Wiper device (1) for wiping windscreens on vehicles, comprising a wiper motor (2), a transmission arranged on the drive shaft of the wiper motor (2), a transmission housing (3) which surrounds the transmission, a transmission housing cover (12) arranged on the transmission housing (3), a transmission driven shaft (6) and a crank (8) which is arranged in a manner secured in terms of rotation on the transmission driven shaft (6) on the side of the transmission housing (3) facing away from the transmission, **characterized in that** the transmission driven shaft/crank connection is a press connection and **in that** the transmission housing (3) or the transmission housing cover (12) has an opening on the side facing away from the crank (8), wherein, in order to press the transmission driven shaft (6) into the crank (8), the end of the transmission driven shaft (6) facing away from the crank (8) can be supported through the opening.

2. Wiper device (1) according to Claim 1, **characterized in that** the inner part of the press connection is the transmission driven shaft (6) and **in that** the outer part of the press connection is a cylindrical hole (9) in the crank (8).

3. Wiper device (1) according to Claims 1 and 2, **characterized in that** the transmission driven shaft (6) is caulked to the crank (8).

4. Wiper device (1) according to Claim 3, **characterized in that** the cylindrical hole (9) in the crank has, on the side facing away from the transmission housing (3), a chamfer, a cylindrical depression or a cut-out shaped in some other way.

5. Wiper device (1) according to one of the preceding claims, **characterized in that** the opening can be closed in particular by a covering cap (15).

6. Wiper device (1) according to one of the preceding claims, **characterized in that** the transmission driven shaft (6) extends, on the side facing away from the crank (8), into the region of the transmission housing (3) or transmission housing cover (12).

7. Method of assembling a wiper device (1) according to the preamble of Claim 1, **characterized in that** the transmission driven shaft (6) is pressed into a cylindrical hole (9) in the crank (8) and possibly caulked, wherein, in order to press or caulk the transmission driven shaft (6) to the crank (8), the end of the transmission driven shaft (6) facing away from the crank (8) is supported through an opening which is provided on the side of the transmission housing (3) or transmission housing cover (12) facing away from the crank (8).

## Revendications

1. Essuie-glace (1) pour l'essuyage du pare-brise de véhicules, comportant un moteur d'essuie-glace (2), comportant un engrenage disposé sur l'arbre primaire du moteur d'essuie-glace, comportant un carter d'engrenage (3) entourant l'engrenage, comportant un couvercle de carter d'engrenage (12) disposé sur le carter d'engrenage (3), comportant un arbre de sortie de l'engrenage (6) et comportant une manivelle (8) disposée fixement sur l'arbre de sortie de l'engrenage (6) au niveau de la face du carter d'engrenage(3) opposée à l'engrenage, **caractérisé en ce que** l'assemblage arbre de sortie de l'engrenage/manivelle est un assemblage par pression et **en ce que** le carter d'engrenage (3) ou le couvercle de carter d'engrenage (12) présente sur la face opposée à la manivelle (8) une ouverture, l'extrémité de l'arbre de sortie de l'engrenage (6) opposée à la manivelle (8) pouvant être soutenue par l'ouverture pour l'assemblage par pression de l'arbre de sortie de l'engrenage (6) à la manivelle (8).

2. Essuie-glace (1) selon la revendication 1, **caractérisé en ce que** la partie intérieure de l'assemblage par pression est l'arbre de sortie de l'engrenage (6), et la partie extérieure de l'assemblage par pression est un alésage cylindrique (9) présent sur la manivelle (8).

3. Essuie-glace (1) selon les revendications 1 et 2, **caractérisé en ce que** l'arbre de sortie de l'engrenage (6) est assemblé à la manivelle (8) par matage des bords.

4. Essuie-glace (1) selon la revendication 3, **caractérisé en ce que** l'alésage cylindrique (9) de la manivelle sur la face opposée au carter d'engrenage (3) présente un chanfrein, un affaissement cylindrique ou une découpe formée d'autre manière.

5. Essuie-glace (1) selon une des revendications précédentes, **caractérisé en ce que** l'ouverture est obturable, en particulier par un capuchon de protection (15).

6. Essuie-glace (1) selon une des revendications précédentes, **caractérisé en ce que** l'arbre de sortie de l'engrenage (6) s'étend sur la face opposée à la manivelle (8) jusque dans la zone avoisinant le carter d'engrenage (3) ou le couvercle de carter d'engrenage (12).

7. Procédé pour le montage d'un essuie-glace (1) selon le préambule de la revendication 1, **caractérisé en ce que** l'arbre de sortie de l'engrenage (6) est encastré par pression et le cas échéant matage des bords dans un alésage cylindrique (9) présent sur la manivelle (8), l'extrémité de l'arbre de sortie de l'engrenage (6) opposée à la manivelle (8) étant soutenue pour l'assemblage par pression ou le matage des bords de l'arbre de sortie de l'engrenage (6) avec la manivelle (8) à travers une ouverture qui est prévue sur la face du carter d'engrenage (3) ou du couvercle de carter d'engrenage (12) opposée à la manivelle (8).
